# EUROPEAN PATENT APPLICATION

(11) **EP 1 281 728 A1**
(43) Date of publication of application: **05.02.2003**
(21) Application number: 01202704.1
(22) Date of filing: 16.07.2001
(51) Int. Cl.: C08J 7/04, C08J 7/18

(54) **Flexible films having barrier properties**

(71) Applicant: DSM N.V., 6411 TE Heerlen (NL)
(72) Inventor: Jahromi, Shahab, 6216 TE Maastricht (NL)
(74) Representative: Renkema, Jaap

(57) **Abstract**

The invention relates to a flexible film comprising a flexible substrate and a coating, whereby the coating is made from a composition comprising liquid crystalline monomers. The invention also relates to a process for making a flexible film having improved barrier properties whereby a flexible substrate is coated with a polyimide layer, the layer is rubbed so as to produce uniformly tilted alignment in a desired azimuthal orientation, a film of composition containing liquid crystalline monomers is applied onto the rubbed polyimide layer, the required liquid crystalline phase is obtained by adjusting the temperature and the composition is cured. Also use of the flexible film as barrier material is claimed.

## Description

The present invention relates to flexible films having barrier properties, a process for making such films and use of the films.

Flexible films with barrier properties for gases like oxygen and for water are known in the art. They are widely used in the food packaging industry. Barrier properties of these polymer films are determined to a large extend by there composition and polarity, crystallinity and glass transition temperature. Barrier properties of polymer films may be sufficient for the food packaging industry, however they are still not high enough for other applications like LED and OLED. Improvements of the barrier properties of polymer films have been proposed. Sometimes a layer with a high crystallinity, such as for example an aluminum layer, may be applied to the plastic substrate improving the barrier properties. Application of a metal layer however, gives the disadvantage that the film looses transparency, which may be needed for applications, where transparency of the flexible film is important.

A different way of achieving oxygen barrier properties has been described in an article by S. Jahromi etal, Macromolecules 2000, 33, 7582-7587. Barrier properties of a film of poly(ethylene terephtalate) (PET) or biaxially oriented polypropylene (BOPP) have been significantly improved by providing these materials with a very thin layer of crystalline melamine. This method however has the disadvantage that an additional step of vapour deposition has to be performed, while at the same time issues as adhesion of the melamine to the substrate are important. Furthermore the melamine layer is soluble in water, which may give insufficient and/or inconsistent barrier properties of the film for a number of applications.

It is an object of the present invention to provide flexible films that have improved oxygen and water barrier properties.

It is also an object of the present invention to provide a method of making a film having improved oxygen and water barrier properties.

It is furthermore an object of the present invention to find new use for such flexible films.

Another aspect of this invention is to produce barrier films having a coating of polymers with high glass transition temperatures, employing low temperature reactions.

An additional aspect of this invention is to provide substrates with coatings of tough, molecularly ordered polymers, which show valuable barrier and other unique properties, useful in a variety of applications.

A further aspect of this invention is to produce coatings on flexible substrates, which coatings comprise polymers characterized in having anisotropic structural features.

The flexible films of the present invention are films comprising a substrate and a coating, whereby the substrate is flexible and the coating is made from a composition comprising liquid crystalline monomers. Preferably, the liquid crystals in said coating have an order parameter between 0.6 and 1.

The flexible substrates of the present invention may be any flexible substrate like a polymer film , for example made from PVC, PET, a polyester, a polyether, a polyolefin or nylon, or any flexible device.

Liquid crystalline materials are already known in the art. EP 0 405 713 A1, which is incorporated herein by reference, discloses the polymerization of liquid crystalline monomers. Liquid crystalline and crystalline materials contain ordering segments in the form of rigid portions, termed "mesogens". Such materials are capable of molecular ordering, including nematic and smectic ordering, in which the molecules arrange themselves in heterogeneous adjacent, molecular configurations wherein the molecules are aligned in parallel relationship to each other.

Thermotropic liquid crystalline monomers and polymers have been intensely studied during recent years, the primary interest up to the present time being the temperature ranges in which liquid crystalline formations can be observed, as well as the relaxation times, or "creep" rates shown by the materials. Difunctional vinyl monomers which exhibit liquid crystalline behavior have, for example, been synthesized and heterogeneously polymerized to form cross-linked polymers by Strzelecki et al, Bull. Chem. Soc. de France 2,597,603,605 (1973). The resulting polymers thus produced, however, are brittle, crystalline materials, lacking the "toughness" required for products capable of widespread application.

Various other organized or liquid crystalline systems which, however, possess a single functional group, have also been employed. For example, styrene- sulfonic acid organized by reaction with ionenes has yielded cationic polymers in reactions displaying appreciable rate enhancements over those of homogeneous monomers at the same concentration. Ionenes have also been used in the past by Tsuchida et al., J. Polymer Sci. 13, 559 (1975), to increase the rates of methacrylic and acrylic acid polymerizations. Konstantinov et al., Vysokomol. Soed., 9A 2236 (1967) has polymerized methacrylyl oxybenzoic in the liquid crystalline state at higher rates, than those obtained in the isotropic state. Cholesteric liquid crystalline monomers, e.g., cholestryl methacrylate, have been polymerized by Saki et al., Polymer J., 3, 414 (1972), at rates considerably more rapid than those obtained during the polymerization of such materials in the isotropic state at even higher temperatures. The polymerization of monofunctional monomers, however, yields polymers with large side chains; consequently, polymers so produced tend to yield high Tg, and are usually brittle materials, again limiting their usefulness.

Certain types of molecules, referred to as "smectic liquid crystalline materials," are capable of ordering themselves in a mesomorphic state in which the molecules are arranged in a lamellar structure, with all, or substantially all of the molecules locally lying parallel to each other. When so ordered, the molecules within a domain form parallel adjacent layers due to the mesogens contained in the molecules, which tend to position themselves adjacent to each other as a result of their spatial configurations. When the side chains of the liquid crystalline molecules are located on both sides of the mesogen groups and are substantially the same in length, the ends of the side chains are juxtaposed to each other in adjacent structures or layers.

Liquid crystalline materials of the type described normally assume an ordered form at temperatures from about 10 °C to 90 °C, and they tend to be relatively small molecules. The liquid crystalline and crystalline materials are rather turbid in appearance until their temperature is increased above their "clearing temperature", where the turbidity disappears as the materials enter the isotropic region. While much of the crystalline ordering disappears above the clearing temperature, some ordering of the molecules is still present even at temperatures somewhat above the clearing point.

When reactive end groups are incorporated at the ends of the monomeric materials, their adjacency permits them to interact even though the glass transition temperature of the forming polymer increases during their interaction, since no diffusion of the groups is necessary to bring them into contact with each other. Consequently, in such molecules, conversion rates of 90%, or above, are generally attainable. Furthermore, since the functional groups on the ends of the side chains extending from individual molecules are contained in separate reactive structures or layers, cyclization does not present a problem.

Surprisingly, the monomers of the invention undergo little shrinkage during the process of polymerization, compared to ordinary polymers. Thus the resulting polymers avoid the strains resulting from shrinkage commonly experienced in typical polymers. Such avoidance makes the inventive polymers extremely useful as "potting" compounds, for instance.

While as previously described, difunctional mesogens have been previously prepared, the result has been the production of highly crystalline, brittle materials of limited usefulness. Surprisingly, it has been found that the introduction of linked "spacer" atoms between the reactive end groups, and the mesogens, provides a flexibility which results in "tough" non-brittle molecules, useful in broad applications. Typically, such molecules will have a molecular weight of from about 300 to 700, although molecular weights greater or less than that number may also provide useful properties. The polymers so formed exhibit relatively high glass transition temperatures due to the fact that the central region of the molecules is cyclic, providing the necessary crystalline ordering, while the end or terminal part of the chains are inter-reacted, giving a relatively "tight" cross-linked network.

Since as is apparent from the preceding, the reactive ends of the molecules are concentrated into a small fraction of the material's molecular volume, and are in physical contact with each other, the reactive groups at the ends can interact readily to give high conversions. Consequently, there is no tendency for the polymerization to terminate as the result of reduced diffusion, and concurrent reduced contact of the reactive groups, as the glass transition temperature rises.

Furthermore, the proximity of the reactive groups with each other assures that the reaction can take place rapidly, since little or no molecular motion is needed for group interaction.

While it has been found that spacer groups are required in order to avoid the crystalline brittleness described, when the side chains become too long, undesirably soft materials are produced. Monovinyl liquid crystal monomers and polymers extensively studied in some laboratories are, therefore, inappropriate for uses where mechanical strength is a desirable characteristic.

Liquid crystalline monomers of the present invention comprise at least one polymerizable group, a mesogenic group or 'rigid rod' group and optionally a spacer group. Preferably at least part of the crystalline monomers used to make the barrier coating comprise at least two polymerizable groups attached to a mesogenic group.

Preferably the polymerizable group is a group that can be polymerized with a radical polymerization or a cationic polymerization reaction. Examples of suitable polymerizable groups are (meth)acrylate, epoxy, vinyl, vinylether, ene, vinylesters, bismaleimide. The use of additional reactive groups of the types well known in the art is also possible. Preferably, acrylate, methacrylate or epoxy functional groups are used.

The mesogenic group can be any group that is able to make liquid crystals. A variety of mesogen materials may be used, such as cyclic compounds and their various derivarives. Examples of suitable mesogenic groups include spiro and naphthenic compounds; trans-cyclohexyl analogues; biphenyl, e.g. dioxy biphenyl; aromatic esters and diesters; 1,2, bis (oxyphenyl) ethane, 4,4'biphenol; methylstilbene, 4,4'-dihydroxy methyl stilbene, terphenyl, biacetylene, bi- and tri-phenylene, p-ethylenbenzoyl esters, azobenzene, and hydroquinone-based bismaleimide whether the preceding are substituted or unsubstituted, as well as other mesogens of the types known to the art. The mesogenic groups based on 1,4-bis (benzoyloxy)phenylene are preferred. It has been found possible to lower the true melting point of the monomers, sometimes desirable, by introducing a degree of asymmetry in the monomers, for example, by putting a substituent, for instance, F, Cl, CN or CH₃ on a cyclic group.

Optionally a spacer may be present between the mesogenic group and the polymerizable group. The function of the spacer group may be twofold: a spacer group may be present to secure the reactivity of the polymerizable group in view of the presence of the mesogenic group. Also a spacer group may be present to enhance the amount of liquid crystalline domains, to enhance the polymerization speed due to a better alignment of the polymerizable groups, or to influence the structure of the liquid crystalline domains. Preferably the spacer is as short as possible to fulfill these requirements. A long spacer group may lower the barrier properties of the flexible film. Various spacer groups which have been found useful for the purpose of introducing the linked spacer atoms of the invention, including spacer groups such as poly(oxyethylene) groups, -CH₂-, -CH₂O-, poly(methylene) groups, as well as equivalent groups. Preferably it has been found to employ from at least 1 to about 18 spacer atoms derived from such groups between each of the functional terminal, or end groups, and the mesogen groups. More preferably the spacer group employs between 1 and 10 spacer atoms. Most preferably, the spacer group employs between 2 and 6 spacer atoms. The number of spacer atoms is the number of atoms that form a bridge between the mesogenic group and the polymerizable group. For example a spacer group with the structure -CH₂CH₂-contains 2 spacer atoms, and a CH2-CH2-O- group contains 3 spacer atoms.

The polymerization reaction may start thermally or by radiation. Preferably, the polymerization reaction is started by radiation with light. In that way the formation of liquid crystals, which is depending on the temperature of the coating composition, and the polymerization reaction, which may be started by irradiation of light, will be independent. The process will thereby be better controlled, resulting in films having superior barrier properties. Preferably the polymerization reactions are initiated by polymerization initiators. Preferably these initiators are formed under the influence of irradiation. The energy ray such as light used herein refers to visible light, ultraviolet light, infrared light, X-rays, α-rays, β-rays, γ-rays, and the like.

Examples of suitable intiatiors are radical photoinitiators like 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyldiphenylphosphine oxide and bis-(2,6-dimethoxybenzoyl)-2,4,4-trimethylpentylphosphine oxide.

Examples of a cationic photoinitiator are onium salts having cations like for example diphenyliodonium, 4-methoxydiphenyliodonium, bis(4-methylphenyl)iodonium, bis(4-tert-butylphenyl)iodonium, bis(dodecylphenyl)iodonium, triphenylsulfonium, diphenyl-4-thiophenoxyphenylsulfonium, bis[4-(diphenylsulfonio-phenyl]sulfide, bis[4-(di(4-(2-hydroxyethyl)phenyl)sulfonio)phenyl]sulfide,
η⁵-2,4-(cyclopentadienyl)[1,2,3,4,5,6-η]-(methylethyl)-benzene]-iron(1+) and the like. Usually anions are present like for example tetrafluoroborate (BF4-), hexafluorophosphate (PF6-), hexafluoroantimonate (SbF6-), hexafluoroarsenate (AsF6-), hexachloroantimonate (SbCl6-), and the like.

In addition, iron/allene complex initiators, aluminum complex/photolysis silicon compound initiators, and the like can also be given as examples of cationic photopolymerization catalysts.

The composition suitable for making the coating may comprise other components in addition to the LC-monomers and the photoinitiators.

For example compounds may be present, that do not copolymerize with the LC-monomers and which may have the following general structure: 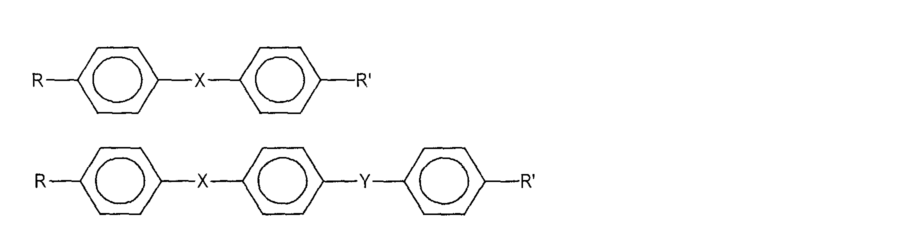 where R and R' are independently alkyl, alkoxyl, acyloxyl, alkylcarbonate, alkoxycarbonyl, all groups having from 1 to 20 carbon atoms, or halo-, nitro-, or cyano- groups. X and Y are connecting bonds between the aromatic rings or groups such as for example -N=N-, -CH=CH-, -CH=N-, -COO-, or -C=C-.

Reactive diluents may be present in the composition of the present invention. Reactive diluents are diluents that react during the curing reaction of the composition The reactive diluents generally contain one or more functional groups that will be able to copolymerize with the LCM. Examples of functional groups are (meth)acrylate, epoxy, vinylether, alcohol and thiol.

For new applications like LED, OLED, there is need for flexible films that have very good barrier properties especially for water and oxygen. The coating of the flexible film of the present invention preferably has as high liquid crystallinity as possible. One way to further increase the amount of liquid crystallinity is by applying a macroscopic orientation of the LCM. Macroscopic orientation of LCM can be achieved using for example surface-active agents, rubbed polymer substrates such as polyimide and polyesters, application of a magnetic or electric field, and by shear flow. Preferably the macroscopic orientation is performed by application of surface active agents or by rubbing of suitable substrates.

Generally, it has been found desirable to control the temperature of polymerization within, or slightly above the liquid crystalline range of the monomer being employed. In the latter regard, while the polymerization is preferably carried out within the liquid crystalline temperature range, i.e., below the clearing temperature of the monomers, when the temperature is raised somewhat above that temperature, semiorganized polymers are still obtainable. Consequently, the relative degree of crystallinity of the polymer, and therefore, its physical characteristics can be controlled by controlling the polymerization temperature, an empirical relationship easily determined through routine experimentation. While the polymerizations are normally run within the liquid crystalline temperature range, mesomorphic-type polymers can be obtained even when the temperature is increased to the point where polymerizations are carried out in the isotropic region; however, as previously explained, the polymerization temperature range will seldom be much above the clearing point of the liquid crystalline monomers, usually no more than about 50 °C above such point. Monomeric materials polymerized in the liquid crystal phase show particularly strong birefringence; however, even monomers polymerized in the isotropic phase exhibit some liquid crystalline organization, especially in the case of the acrylate polymers. Furthermore, the polymers produced are substantially completely cross-linked.

The flexible film of the present invention can be prepared in different ways. In one embodiment of the invention, the (polymeric) substrate is modified in such a way to act as a alignment layer. This can be done for example by adjusting the surface topology of the polymeric substrate, and/or coating the substrate with alignment materials, preferably polyimidi. In this case, the substrate is coated with a polyimide solution preferably using the spin coating method. Other methods of coating the alignment material, for example, dip or slot-die coating can be used as well. The substrate coated with the polyimide alignment layer is then baked at such a temperature that does not compromise the mechanical stability of the substrate. The alignment material is then rubbed so as to produce uniformly tilted alignment in the desired azimuthal orientation. A thin film of liquid crystal monomer is applied to the alignment layer using the technique of for example spin coating from a solution in a solvent. The solvent maybe either inert or reactive. Other methods of coating the LCM material such as, for example, dip or slot-die coating can be used as well. The solution coated onto the surface of the alignment layer may contain prepolymerized liquid crystal side-chain polymers added as a viscosity modifier to improve coating wetting characteristics. In addition, the solution may contain a photoinitiator as stated above, especially when a photopolymerization reaction is used. By adjusting the temperature, the ideal LC phase, i.e. smectic may be obtained. The liquid crystal film may then be illuminated with ultraviolet light (actinic radiation) at a wavelength of approximately 325 to 360 nanometers with a total exposure sufficient to polymerize the monomer to a liquid crystal polymer film, thereby preserving the order of the liquid crystal phase and the macroscopic orientation. After the LC monomer has been cured, another layer of LCM may be deposited on its surface in a manner entirely analogous to the original deposition of the LCM. Other methods for polymerizing thin monomer films well known in the art can be used aswell.

For each of the previous illustrative embodiments, a number of variations are possible and would be obvious to one skilled in the art of liquid crystal display devices. For example, other possible substrate materials may include non-birefringent polymer films. The polymerizable liquid crystal monomer material may include, as a constituent, molecules that contain two reactive functional groups and therefore can act as cross-linking agents. Other polar tilt angles at the liquid crystal/alignment layer interface can be achieved by suitable selection of reactive liquid crystals, modification of the alignment materials, rubbing conditions, etc. Furthermore, a non-reactive liquid crystal material can be combined with the polymerizable liquid crystal. The resulting liquid crystal polymer film would then have the properties of a plastic or gel. The liquid crystal material could also contain a polymer, liquid crystal polymer, or oligomer that increases the viscosity of the liquid crystal mixture and improves the film forming properties thereof.

Additionally, the various embodiments have been described above with specific pretilt, splay and twist orientations and/or angles, but the present invention is not limited to specific angles or orientations. Finally, the multilayer embodiment has been specifically described with nematic layers but the multilayer embodiment can be of multiple smectic C layers.

In (liquid) crystals the degree of order can be represented in terms of order parameter S. In a perfect crystal, S= 1, whereas in the isotropic phase S= 0. The value of S characterizes the order of a single crystal or single liquid monocrystal and it is a function of the temperature of the material and its composition. Usually the maximum value of S in a nematic liquid crystal is between 0.6 and 0.8; in a smectic liquid crystal S can be as high as 0.9 and for a crystal S is 1. For a non-homogeneous (polycrystalline) layer, one can also introduce the degree of orientation S*, where S*= 0 when the external orientational influences are completely absent, and S*→ S with complete orientation in a monocrystal. More information regarding order parameters can be found in L.M. Blinov "Electro-Optical, and Magnetic-Optical Properties of Liquid Crystals" Wiley-Interscience Publication, New York, 1983. We have found that the best barrier properties are obtained when both S and S* approaches 1. Preferably S and S* are between 0.6 and 1. More preferably S and S* are between 0.8 and 1. This means that the LC phase should be preferably smectic and macroscopically oriented. The smectic phases are preferred that have three-dimensional long-range positional order as in a crystal, though with weak interlayer forces. Some of these phases include S_{B}, S_{E}, S_{G}, S_{H}, S_{J}, S_{K}.

### Example

A polyester film (PPC 10 Interleaved A4 4minl) was coated with a 100 µm thick layer of a composition cotaining the LCM and 1.0% w/w of Irgacure 651. The LCM and the corresponding LC transitions are shown in the figure:

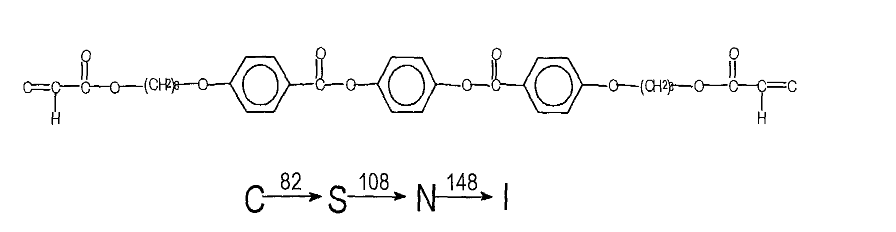

After adjusting the temperature to enter the desired (LC) phase, the sample was irradiated under nitrogen with a Flexcure lamphouse/Controller (Macam) equipped with a Philips H bulb. The cured ordered film was then pilled off the polyester film. The oxygen permeability experiments were carried out on the (ordered) films with a MOCON Oxtran 2/20 ML. The thickness measurements were conducted using a MIT Systems, Ml 20 NT equipment. The oxygen transmission rate (OTR) data of the (ordered) acrylate films are shown in the table.

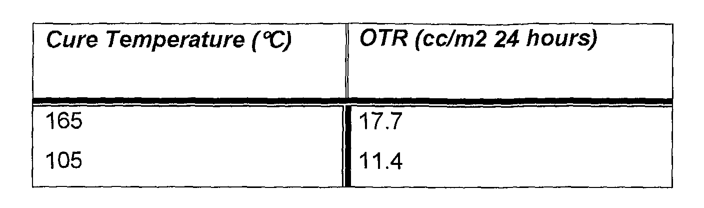

As can be seen in the table, the OTR values decreases with the cure temperature. This indicates that the barrier properties improve as the degree of molecular order increases.

## Claims

1. A flexible film comprising a substrate and a coating, whereby the substrate is flexible and the coating is made from a composition comprising liquid crystalline monomers.

2. The flexible film according to claim 1, wherein the liquid crystals in said coating have an order parameter between 0.6 and 1.

3. The flexible film according to claims 1 or 2, wherein the composition comprises at least one liquid crystalline monomer having a mesogenic group, two polymerizable groups and a spacer group between the mesogenic group and each polymerizable group, wherein the spacer group contains between 1 and 10 spacer atoms.

4. The flexible film according to claim 3, wherein the spacer group contains between 2 and 6 spacer atoms.

5. Flexible film according to anyone of claims 1-4, wherein the coating has a S value between 0.6 and 1, and wherein the coating has a S* value between 0.6 and 1.

6. Process for making a flexible film having improved barrier properties whereby a flexible substrate is coated with a polyimide layer, the layer is rubbed so as to produce uniformly tilted alignment in a desired azimuthal orientation, a film of composition containing liquid crystalline monomers is applied onto the rubbed polyimide layer, the required liquid crystalline phase is obtained by adjusting the temperature and the composition is cured.

7. The process according to claim 6, wherein the composition contains a photoinitiator.

8. The process according to any one of claims 6-7, wherein curing of the composition is performed with UV-light.

9. Process according to anyone of claims 6-8, whereby the orientation of the composition is essential smectic.

10. Process according to anyone of claims 6-9, whereby the composition further comprises liquid crystalline molecules, that do not polymerize with the liquid crystalline monomers.

11. Process according to anyone of claims 6-10, whereby the composition further comprises a component that enhances the orientation of the liquid crystalline monomers.

12. Use of the flexible film as defined in anyone of claims 1 - 5 as barrier material.

13. Article containing a flexible film as defined in anyone of claims 1-5 or obtainable by a process as defined in anyone of claims 6-11.
